# EUROPEAN PATENT SPECIFICATION

(11) **EP 0 520 576 B1**
(45) Date of publication and mention of the grant of the patent: **31.05.1995**
(21) Application number: 92201854.4
(22) Date of filing: 23.06.1992
(51) Int. Cl.: A01G 23/04

(54) **Device for lifting a plant**
Vorrichtung zum Heben einer Pflanze
Dispositif pour soulever une plante

(30) Priority: 25.06.1991 NL 9101100
(43) Date of publication of application: 30.12.1992
(73) Proprietor: J. VAN DAM B.V., NL-4043 LH Opheusden (NL)
(72) Inventor: Van Dam, Jan, NL-4043 LH Opheusden (NL)
(74) Representative: de Bruijn, Leendert C.

(56) References cited:
- DE-A- 2 104 709
- US-A- 3 017 708
- US-A- 3 427 734
- US-A- 3 594 931

## Description

The present invention relates to a device according to the preamble of claim 1.

Such a device is known from US-A-3,427,734. The carrier in this case comprises a semi-circular curved part which must be fitted low down near the ground, and in which the arm with the cutting element is movable. A round cut is produced by cutting a number of times into the ground and moving the carrier. When this cut has been made the plant in question can be removed. The cutting elements extend at an angle of approximately 45° in this case.

This device is designed in particular for the removal of trees. The disadvantage of the device is that it is relatively complex and takes up a large amount of space around the tree. It is also laborious to handle because it first has to be positioned accurately under the tree. Such a device is unsuitable for lifting plants with low-hanging branches and/or leaves. Plants like conifers are grown on a large scale and are lifted after some time for further distribution. It is important here that the conifers for example, should not be damaged. When the carrier is inserted from the bottom side damage cannot be ruled out. The bulky design of the device according to the abovementioned US patent specification also means that it is not possible to place conifers with a small gap between them without damaging them. For that reason, although the device according to the US patent specification is suitable for lifting larger trees placed with large gaps between them, it is not suitable for lifting conifers which are grown on a large scale close together.

The object of the present invention is to provide a device which does not have such disadvantages.

This object is realized in case of the device described above with the characterizing features of claim 1.

The invention is based on the idea of placing the carrier above the tree. This is, of course, practical only if the plant is a manageable height. Such a height will always be under control in conifer nurseries. It then becomes possible in this case to support the arm by means of a support at a single point, and it is no longer necessary to use the rotary ring disclosed in US Patent Specification 3,427,734. A considerable space saving can be obtained by these two measures. This makes it possible to place the conifers relatively close together in rows without the device for lifting being impeded in any way. Positioning the carrier above the plant ensures that damage to the bottom side of the plant by the carrier is also ruled out.

It is pointed out that British Patent Publication 1,034,771 discloses a device for lifting plants which comprises two semi-circular cutting elements. In the working position these form a continuous cutting element without lateral free ends. They are fixed by means of an arm and a support to a carrier. The arm is hinged to the support in this case. The support is in turn connected to the carrier in such a way that it tilts. Imposing a rotary movement on the support will produce a tilting movement on the arm, and thus on the cutting element, and the cutting element is gradually pressed into the ground.

This device cannot be used for conifers, in which the foliage reaches almost to the ground.

According to an advantageous embodiment of the invention, the carrier can be fitted in the frame in such a way that it is displaceable. This makes it possible to position the frame above a number of conifers, and the conifers can be lifted one by one by manoeuvring with the carrier.

According to another advantageous embodiment, the frame is mobile. In this case the frame can be self-propelling or can be towed, pushed or carried in some way.

According to a further advantageous embodiment, a control unit is present on the frame and is fitted on the frame so that it is displaceable in the same direction as the carrier. This means that the operator always has the optimum view of the particular conifer being lifted from the control unit.

According to a further advantageous embodiment, the rotary movement of the arm is imposed by a drive of some sort disposed on the carrier and engaging on a tooth system of the support.

While in the case of US Patent Specification 3,427,734 only a movement of the carrier through a limited angle is possible, according to a preferred embodiment of the invention a rotation of the arm through at least 360° is provided. The cutting element comprises a spade, so that with a limited number of cutting strokes, and more particularly three cutting strokes, a continuous cut can be obtained. This cut is such that the outside of the root ball corresponds to the shape of a pot in which the conifer is to be planted.

The cutting element is preferably placed at an angle of approximately 5° relative to the vertical.

According to a further embodiment of the invention, a stop cylinder is present on the arm, in order to limit the stroke of the cutting element. This means that, if a number of cutting actions have to be carried out in succession, the return stroke of the cutting element can be limited, so that it is possible to work faster, and branches and the like at the bottom side of the plant are not damaged.

The invention will be explained in greater detail below with reference to an example of an embodiment shown in the drawing, in which:
Fig. 1 shows schematically in side view, and partially cut away, an embodiment of the device according to the application; and
Fig. 2 shows a detail of the device according to Fig. 1.

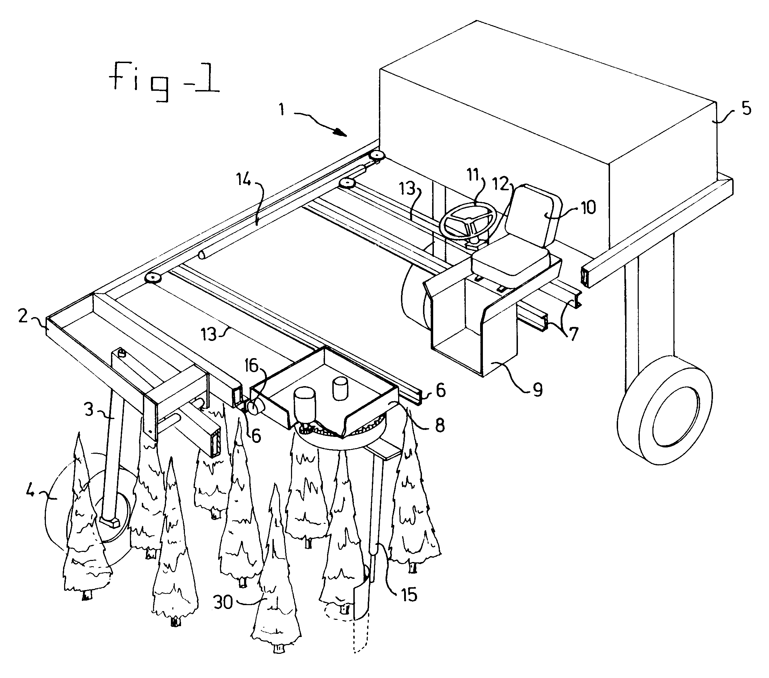

The conifer lifting machine according to the invention is indicated in its entirety by 1 in Fig. 1. It comprises a frame 2 on which four wheels (only three shown) are fitted by means of uprights 3. At least two wheels of an axle are steerable in a manner not shown. A drive motor for the device is also present in box 5 (in a manner not shown), and it is, of course, also possible to tow, push or carry the device.

Two guide bars 6 and two guide bars 7 are present on the frame 2. A carrier 8 is provided so that it is displaceable in the guide bars 6, while the control unit 9 for the driver is disposed so that it is displaceable in the guide bars 7.

In the figure shown it comprises a seat 10, a steering device 11, and a control panel 12. Carrier 8 and control unit 9 are interconnected by means of a double chain 13, in such a way that control unit 9 carries out the same movement on movement of carrier 8 to and fro, so that the driver always has the optimum view over carrier 8. The to and fro movement of carrier 8 is achieved by moving hydraulic cylinder 14, which is controlled from control panel 12, inwards or outwards.

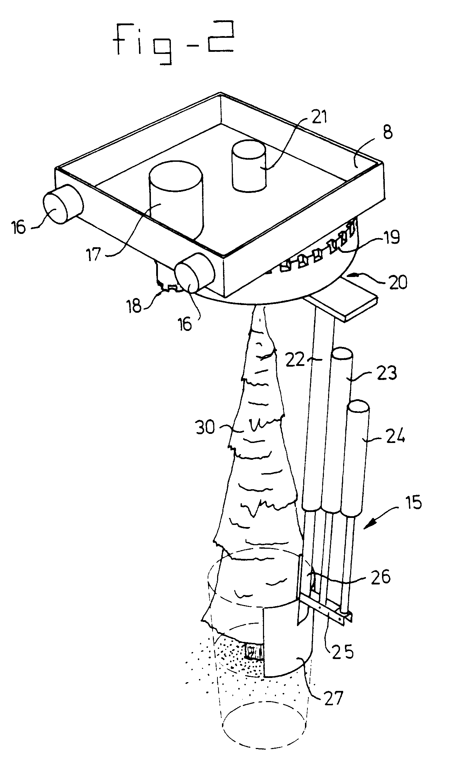

The carrier 8 with the arm 15 on it is shown in more detail in Fig. 2. It can be seen from it that carrier 8 has lateral guide rollers 16 which run in guide bars 6. Carrier 8 has on it a motor 17 provided with a drive gear 18 which meshes with a ring gear 19 of support 20. Support 20 is connected at 21 to a rotary bearing rotatable only about carrier 8. The arm indicated in its entirety by 15 is fitted on support 20. It comprises a guide 22 on which two cylinders, a cutting cylinder 23 and a stop cylinder 24, are fixed. Cutting cylinder 23 is firmly connected to a rod 25, which is in turn connected to the pipe 26 projecting from guide 22. Stop cylinder 24 can rest against rod 25 and is not firmly connected to it. A cutting element such as a spade 27 is also fitted on pipe 26. This spade is circular in shape and covers an angle of arc of 120°. The bearing at 21 in the carrier 8 and the remaining construction of support 20 and arm 15 are such that the position of cutting element 27 relative to carrier 8 is fixed. This means that cutting element 27 cannot tilt relative to the carrier 8. The angle which the cutting element 27 forms relative to the vertical is approximately 5°.

Conifers 30 are also shown in the drawings. As can be seen from Fig. 1, they are disposed in three rows.

The device described above works as follows:
In the growing of conifers it is found that not all conifers are sufficiently fully grown to be removed and further distributed at the same time. This makes it necessary to remove conifers selectively.

For this, the device 1 according to the invention is placed above a number of rows of conifers. The driver then manoeuvres carrier 8 by means of the control panel 12 in such a way that the axis of said carrier essentially coincides with the axis of the conifer. Cutting element 27 is then moved down by means of cutting cylinder 23 until it is just above the ground.

The stop cylinder 24 follows to this position. The cutting cylinder 23 is then operated further, and cutting element 27 is inserted into the ground.This point can be selected by the pressure in the hydraulic system increasing through the resistance encountered when cutting element 27 is entering the ground. Cutting element 27 is then moved back until rod 25 rests against the outward moved piston of stop cylinder 24. The stroke of the cutting element is limited in this way, which makes efficient operation possible, and branches and the like at the bottom side of the conifer are also prevented from being damaged. After the upward movement of cutting element 27, the latter is moved through an angle of 120°, and the next cutting stroke is carried out. A third stroke is then carried out, following which a continuous round cut is achieved. The conifer is removed in a manner not shown. If the operator wishes to remove another conifer in the same row, he does not need to move the device 1, but it is necessary only to move carrier 8 and control point 9 to and fro in guide bars 6, 7 by means of cylinder 14.

It is possible to achieve the drive of support 20 in some way other than by means of a motor 17. The coupled movement between control point 9 and carrier 8 can also be carried out in a different way.

Although the invention is described above with reference to lifting conifers, it must be understood that any suitable plant can be handled with the device according to the invention. All that is required is that the carrier can be moved above the plant. The number of cutting strokes for achieving a continuous cut around the root ball of the plant is, of course, also variable.

## Claims

1. Device for removing a plant, such as lifting conifers, comprising a spade-like cutting element (27) fitted on an arm (15) by means of a support (20) which is connected to a carrier (8) connected to a frame (2), said carrier adapted to be moved to and fro, in the working position said arm being disposed so that it rotates about the axis of the conifer and on the carrier (8) such that a pot-shaped cut is produced in the ground, characterized in that in the working position the carrier (8) is disposed above the plant, that said support (20) is rigidly connected to the arm (15) and is connected by means of a rotary bearing (21) to said carrier (8), and that the rotary bearing (21) is concentric with the center of rotation of the arm.

2. Device according to claim 1 in which the frame (2) is mobile.

3. Device according to claim 1 or 2, in which a control unit comprising a steering device (11) and a control panel (12) which can be moved on the frame in the same direction as the carrier is disposed on the frame.

4. Device according to one of the preceding claims, in which the support comprises a ring gear (19) which meshes with a drive gear (18) fitted on the carrier.

5. Device according to one of the preceding claims, in which the carrier is disposed so that it rotates through at least 360°.

6. Device according to one of the preceding claims, in which the spade is curved and extends over a circular arc of approximately 120°.

7. Device according to one of the preceding claims, in which in the working position the cutting element is placed at an angle of approximately 5° relative to the vertical.

8. Device according to one of the preceding claims in which a stop cylinder (24) is present on the arm for limiting the lifting stroke of the cutting element.

## Patentansprüche

1. Vorrichtung zum Entfernen einer Pflanze, beispielsweise zum Anheben von Koniferen, die ein spatenartiges Schneidelement (27) umfaßt, das mittels einer Halterung (20), die mit einem mit einem Gestell (2) verbundenen Träger (8) verbunden ist, an einem Arm (15) angebracht ist, wobei der Träger hin und her bewegt werden kann, und der Arm in der Arbeitsstellung so angeordnet ist, daß er sich um die Achse der Konifere und an dem Träger (8) dreht, so daß ein topfförmiger Schnitt im Boden hergestellt wird, **dadurch gekennzeichnet,** daß sich der Träger (8) in der Arbeitsstellung über der Pflanze befindet, daß die Halterung (20) starr mit dem Arm (15) verbunden und mittels eines Drehlagers (21) mit dem Träger (8) verbunden ist, und daß das Drehlager (21) konzentrisch zum Drehzentrum des Arms ist.

2. Vorrichtung nach Anspruch 1, wobei das Gestell (2) beweglich ist.

3. Vorrichtung nach Anspruch 1 oder 2, wobei eine Bedieneinheit, die eine Lenkeinrichtung (11) und eine Bedientafel (12) umfaßt, die an dem Gestell in der gleichen Richtung wie der Träger bewegt werden kann, an dem Rahmen angeordnet ist.

4. Vorrichtung nach einem der vorangehenden Ansprüche, wobei die Halterung einen Zahnkranz (19) umfaßt, der mit einem Antriebszahnrad (18) in Eingriff ist, das an dem Träger angebracht ist.

5. Vorrichtung nach einem der vorangehenden Ansprüche, wobei der Träger so angeordnet ist, daß er sich um wenigstens 360° dreht.

6. Vorrichtung nach einem der vorangehenden Ansprüche, wobei der Spaten gekrümmt ist und sich über einen Kreisbogen von ungefähr 120° erstreckt.

7. Vorrichtung nach einem der vorangehenden Ansprüche, wobei das Schneidelement in der Arbeitsstellung in einem Winkel von ungefähr 5° zur Vertikalen angeordnet ist.

8. Vorrichtung nach einem der vorangehenden Ansprüche, wobei ein Stoppzylinder (24) an dem Arm vorhanden ist, der den Anhebehub des Schneidelementes begrenzt.

## Revendications

1. Dispositif pour enlever une plante, par exemple pour arracher des conifères, comprenant un élément coupant semblable à une bêche (27), monté sur un bras (15) au moyen d'un support (20) accouplé à un appui (8) monté sur un châssis (2), cet appui étant conçu pour être déplacé avec un mouvement de va-et-vient jusqu'à la position de travail, le bras étant disposé de façon à tourner autour de l'axe du conifère et sur l'appui (8), de façon à former dans le sol une saignée ayant la forme d'un pot, caractérisé en ce que, dans la position de travail, l'appui (8) est disposé au-dessus de la plante, en ce que le support (20) est accouplé de façon rigide au bras (15) et est accouplé à l'appui (8) au moyen d'un palier tournant (21), et en ce que le palier tournant (21) est centré sur le centre de rotation du bras.

2. Dispositif selon la revendication 1, dans lequel le châssis (2) est mobile.

3. Dispositif selon la revendication 1 ou 2, dans lequel un poste de commande, comprenant un dispositif de direction (11) et un panneau de commande (12), qui peut être déplacé sur le châssis dans la même direction que l'appui, est monté sur le châssis.

4. Dispositif selon l'une des revendications précédentes, dans lequel le support comprend une couronne dentée (19) qui engrène avec une roue dentée d'entraînement (18), montée sur l'appui.

5. Dispositif selon l'une des revendications précédentes, dans lequel le support est disposé de façon à tourner sur au moins 360°.

6. Dispositif selon l'une des revendications précédentes, dans lequel la bêche est courbe et elle s'étend sur un arc de cercle d'environ 120°.

7. Dispositif selon l'une des revendications précédentes, dans lequel, dans la position de travail, l'élément coupant est placé à un angle d'environ 5° par rapport à la verticale.

8. Dispositif selon l'une des revendications précédentes, dans lequel un cylindre d'arrêt (24) est monté sur le bras pour limiter la course de montée de l'élément coupant.
